# EUROPÄISCHE PATENTSCHRIFT

(11) **EP 2 154 411 B1**
(45) Veröffentlichungstag und Bekanntmachung des Hinweises auf die Patenterteilung: **02.11.2011**
(21) Anmeldenummer: 09450092.3
(22) Anmeldetag: 04.05.2009
(51) Int. Cl.: F16L 47/12, F16L 33/22, F16L 37/088

(54) **Vorrichtung zum Anschluss eines Kunststoffrohes an einem Anschlussnippel**
Device for attaching a plastic tube to a connection nipple
Dispositif de raccordement d'un tuyau en matière plastique sur un raccord de connexion

(30) Priorität: 29.07.2008 AT 11692008
(43) Veröffentlichungstag der Anmeldung: 17.02.2010
(73) Patentinhaber: KE-KELIT Kunststoffwerk Gesellschaft m.b.H., 4017 Linz (AT)
(72) Erfinder: Egger, Karl, 4017 Linz (AT)
(74) Vertreter: Hübscher, Helmut

(56) Entgegenhaltungen:
- WO-A1-2004/104466
- DE-A1- 19 702 289
- DE-U1- 29 610 385
- DE-U1- 29 706 377

## Beschreibung

Die Erfindung bezieht sich auf eine Vorrichtung zum Anschluss eines Kunststoffrohres an einem Anschlussnippel, wobei das mit einer stirnseitigen Anfasung im Bereich des Innendurchmessers versehene Anschlussende des Kunststoffrohres, das einen im profilierten Anschlussnippel gehaltenen Dichtungsring übergreift, zwischen dem Anschlussnippel und einer Klemmhülse axial festgehalten ist.

Um mit einem Druckmedium beaufschlagte Kunststoffrohre, beispielsweise Rohr für Wasserleitungen im Bereich von Hausinstallationen, abzugsicher an einem Anschlussnippel einer Armatur zu befestigen, ist es bekannt, das auf den mit einer Profilierung versehenen Anschlussnippel aufgeschobene Kunststoffrohr zwischen dem Anschlussnippel und einer das Kunststoffrohr umschließenden Klemmhülse festzuklemmen (DE 297 06 377 U1). Die Abdichtung zwischen dem Anschlussnippel und dem Kunststoffrohr wird dabei durch wenigstens einen in eine umlaufende Ausnehmung des Anschlussnippels eingesetzten Dichtungsring sichergestellt, über den das Kunststoffrohr auf den Anschlussnippel aufgeschoben werden muss. Zu diesem Zweck ist das Anschlussende des Kunststoffrohres im Bereich seines Innendurchmessers stirnseitig mit einer Anfasung versehen, die entlang der Dichtungsring beim Aufschieben des Kunststoffrohres auf den Anschlussnippel unter einer elastischen Verformung in die Ausnehmung eingedrückt wird. Fehlt eine solche Anfasung oder ist sie unzureichend, so besteht die Gefahr, dass der an die Stirnfläche des Kunststoffrohres anschlagende Dichtungsring beim Aufschieben des Kunststoffrohres auf den Anschlussnippel aus der Ausnehmung gezwängt und entlang des Anschlussnippels verschoben wird, was wiederum die notwendige Abdichtung zwischen Anschlussnippel und Kunststoffrohr gefährdet, ohne dass diese Gefährdung erkannt wird, weil ja die Klemmhülse, zwischen der und dem Anschlussnippel das Kunststoffrohr eingeführt wird, den Dichtungsring abdeckt. Aus der DE 296 10 385 U1 ist es bekannt eine Kupplungshülse unter Zwischenlage von Dichtungen auf den Steckzapfen aufzuschieben und mit einem federnden Haltering unlösbar zu verrasten. Ein an die Kupplung anzuschließendes Kunststoffrohr wird zwischen Kupplungshülse bzw. Steckzapfen und eine Stützhülse eingeschoben. Der Federring dient zur Verrastung von Steckzapfen und Kupplungshülse. Diese Druckschrift sieht nicht die Verwendung von stirnseitig angefasten Kunststoffrohren vor.

Der Erfindung liegt somit die Aufgabe zugrunde, eine Vorrichtung zum Anschluss eines Kunststoffrohres an einem Anschlussnippel der eingangs geschilderten Art so auszugestalten, dass eine unzulässige Verlagerung des Dichtungsringes beim Anschließen des Kunststoffrohres am Anschlussnippel unterbunden wird.

Die Erfindung löst die gestellte Aufgabe dadurch, dass der Anschlussnippel in der Anschlussstellung des Kunststoffrohres auf der der Stirnseite des Anschlussendes gegenüberliegenden Seite des Dichtungsringes eine Aufnahmenut für einen umfangsseitig offenen, federnden Sicherungsring aufweist, der sich radial federnd in der Aufnahmenut abstützt und dessen Außendurchmesser größer als der Innendurchmesser des Kunststoffrohres, aber kleiner als der Außendurchmesser der Anfasung des Anschlussendes des Kunststoffrohres ist.

Wird zufolge dieser Maßnahme versucht, ein nicht oder nur unzureichend angefastes Anschlussende eines Kunststoffrohres auf den Anschlussnippel aufzuschieben, so bildet der Sicherungsring aufgrund seiner entsprechend gewählten Abmessungen mit seiner dem Anschlussende des Kunststoffrohres zugekehrten Stirnseite eine Anschlagfläche, die das weitere Aufschieben des Kunststoffrohres auf den Anschlussnippel verhindert. Bei einem ordnungsgemäß angefasten Kunststoffrohr stellt jedoch die Anfasung eine Anlauffläche für den Sicherungsring dar, der somit radial auf den Innendurchmesser des Kunststoffrohres zusammengedrückt wird und den Weg für das Aufschieben des Kunststoffrohres in die Anschlussstellung über den Dichtungsring hinweg freigibt. Der Sicherungsring verhindert somit den Anschluss eines für einen solchen Anschluss ungenügend vorbereiteten Kunststoffrohres.

Damit der Sicherungsring seine ihm zugedachte Aufgabe unabhängig von der jeweiligen Einbaulage des Anschlussnippels erfüllen kann, ist dafür zu sorgen, dass er koaxial zum Anschlussnippel in seiner Aufnahmenut abgestützt wird. Zu diesem Zweck kann der Sicherungsring gegen den Nutgrund vorstehende Federzungen aufweisen, über die die Zentrierung des Sicherungsringes gegenüber dem Anschlussnippel in allen Einbaulagen gewährleistet werden kann. Der radiale Einfederungsweg der Federzungen muss dabei zumindest dem Übermaß des Außenradius des unbelasteten Sicherungsringes gegenüber dem Innenradius des Kunststoffrohres entsprechen.

In der Zeichnung ist der Erfindungsgegenstand beispielsweise dargestellt. Es zeigen
- Fig. 1: eine erfindungsgemäße Vorrichtung zum Anschließen eines Kunststoff- rohres an einem Anschlussnippel mit einem ordnungsgemäß auf den Anschlussnippel aufgeschobenen Kunststoffrohr in einem vereinfachten Axialschnitt,
- Fig.: 2 die Vorrichtung nach der Fig. 1 mit einer Zwischenstellung des Kunststoffrohres während des Aufschiebens,
- Fig.: 3 eine der Fig. 2 entsprechende Darstellung mit einem nicht angefasten Kunststoffrohr und
- Fig. 4: einen Schnitt nach der Linie IV-IV der Fig. 3.

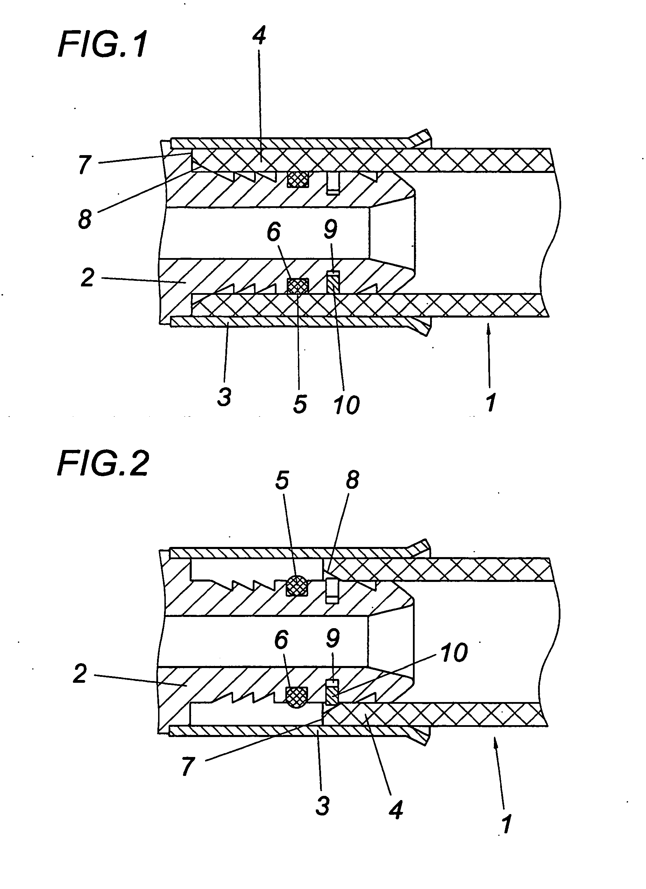

Die dargestellte Vorrichtung zum Anschluss eines Kunststoffrohres 1 an einem Anschlussnippel 2 einer nicht näher dargestellten Armatur weist eine Klemmhülse 3 auf, zwischen der und dem Anschlussnippel 2 das Anschlussende 4 des Kunststoffrohres 1 einzuführen ist, um anschließend über die Klemmhülse 3 am profilierten Anschlussnippel 2 festgeklemmt zu werden, beispielsweise durch das Einprägen von Umfangssicken. Die Abdichtung zwischen dem Anschlussnippel 2 und dem Anschlussende 4 des Kunststoffrohres 1 erfolgt mit Hilfe wenigstens eines Dichtungsringes 5, der in eine umlaufende Ausnehmung 6 des Anschlussnippels 2 eingesetzt ist. Damit der im unbelasteten Zustand über den Außenumfang des Anschlussnippels 2 vorstehende Dichtungsring 5 nicht beim Einschieben des Endabschnittes 4 des Kunststoffrohres 1 in den Ringspalt zwischen dem Anschlussnippel 2 und der Klemmhülse 3 aus der Ausnehmung 6 gezwängt werden kann, ist die Stirnseite 7 des Anschlussendes 4 des Kunststoffrohres 1 mit einer Anfasung 8 versehen, wie dies den Fig. 1 und 2 entnommen werden kann.

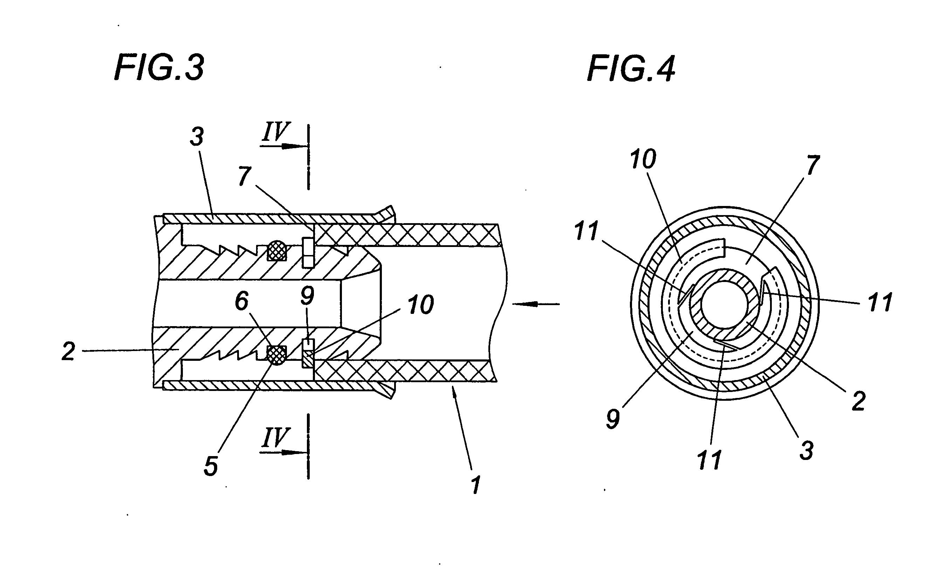

Damit verhindert wird, dass ein nicht bzw. nur unzureichend angefastes Kunststoffrohr 1 über den Dichtungsring 6 hinweg auf den Anschlussnippel 2 in die vorgegebene Anschlussstellung aufgeschoben werden kann, ist auf der in der Anschlussstellung des Kunststoffrohres 1 (Fig. 1) der Stirnseite 7 des Anschlussendes 4 gegenüberliegenden Seite des Dichtungsringes 5 ein in eine Aufnahmenut 9 des Anschlussnippels 2 eingesetzter Sicherungsring 10 vorgesehen. Dieser Sicherungsring 10 ist offen ausgebildet und trägt gemäß der Fig. 4 radial einwärts abstehende Federzungen 11, mit deren Hilfe er sich am Grund der Aufnahmenut 9 abstützt. Die Anordnung ist dabei so getroffen, dass im unbelasteten Zustand des Sicherungsringes 10 sein Außendurchmesser kleiner als der Außendurchmesser der Anfasung 8, aber größer als der Innendurchmesser des Kunststoffrohres 1 ist. Wird demnach gemäß der Fig. 2 ein ordnungsgemäß angefastes Kunststoffrohr 1 auf den Anschlussnippel 2 aufgeschoben, so bildet die Anfasung 8 des Anschlussendes 4 eine Anlauffläche für den Sicherungsring 10, der entlang dieser Anlauffläche radial einfedert und den Weg zum Dichtungsring 5 freigibt, über den hinweg das Anschlussende 4 des Kunststoffrohres 1 in die Anschlussstellung nach der Fig. 1 aufgeschoben werden kann. Weist jedoch das Anschlussende 4 des Kunststoffrohres 1-keine oder eine unzureichende Anfasung 8 auf, so schlägt die Stirnseite 7 des Anschlussendes 4 des Kunststoffrohres 1 an die der Stirnseite 7 zugekehrte Stirnfläche des Sicherungsringes 10 mit dem Ergebnis an, dass das Anschlussende 4 des Kunststoffohres 1 nicht mehr weiter in den Ringspalt zwischen Anschlussnippel 2 und Klemmhülse 3 eingeschoben werden kann. Aufgrund des erkennbar nicht vollständigen Aufschiebens des Kunststoffrohres 1 auf den Anschlussnippel 2 muss das Kunststoffrohr 1 vor dem Anschließen wieder vom Anschlussnippel 2 abgezogen und entsprechend angefast werden, bevor der Anschluss vorgenommen werden kann.

## Patentansprüche

1. Vorrichtung mit einem Kunststoffrohr (1) und einem Anschlussnippel (2) zum Anschluss des Kunststoffrohres (1) an dem Anschlussnippel (2), wobei das mit einer stirnseitigen Anfasung (8) im Bereich des Innendurchmessers versehene Anschlussende (4) des Kunststoffrohres (1), das einen im profilierten Anschlussnippel (2) gehaltenen Dichtungsring (5) übergreift, zwischen dem Anschlussnippel (2) und einer Klemmhülse (3) axial festgehalten ist, **dadurch gekennzeichnet, dass** der Anschlussnippel (2) in der Anschlussstellung des Kunststoffrohres (1) auf der der Stirnseite (7) des Anschlussendes (4) gegenüberliegenden Seite des Dichtungsringes (5) eine Aufnahmenut (9) für einen umfangsseitig offenen, federnden Sicherungsring (10) aufweist, der sich radial federnd in der Aufnahmenut (9) abstützt und dessen Außendurchmesser größer als der Innendurchmesser des Kunststoffrohres (1), aber kleiner als der Außendurchmesser der Anfasung (8) des Anschlussendes (4) des Kunststoffrohres (1) ist.

2. Vorrichtung nach Anspruch 1, **dadurch gekennzeichnet, dass** der Sicherungsring (10) mit Hilfe von Federzungen (11) in der Aufnahmenut (9) radial federnd abgestützt ist.

## Claims

1. Apparatus having a synthetic material pipe (1) and a connection nipple (2) for connecting the synthetic material pipe (1) to the connection nipple (2), wherein the connection end (4) of the synthetic material pipe (1), which is provided with an end-side chamfer (8) in the region of the inner diameter and engages over a sealing ring (5) held in the profiled connection nipple (2), is retained in an axial manner between the connection nipple (2) and a clamping sleeve (3), **characterised in that** in the connection position of the synthetic material pipe (1) the connection nipple (2) comprises, on the side of the sealing ring (5) opposite the end side (7) of the connection end (4), a receiving groove (9) for a resilient locking ring (10) which is open on the peripheral side and which is supported radially in a resilient manner in the receiving groove (9) and whose outer diameter is greater than the inner diameter of the synthetic material pipe (1) but is smaller than the outer diameter of the chamfer (8) of the connection end (4) of the synthetic material pipe (1).

2. Apparatus as claimed in claim 1, **characterised in that** the locking ring (10) is supported radially in a resilient manner in the receiving groove (9) with the aid of flexible tongues (11).

## Revendications

1. Dispositif, avec un tube en matière synthétique (1) et un embout de raccordement (2), pour le raccordement du tube en matière synthétique (1) à l'embout de raccordement (2), l'extrémité de raccordement (4), munie d'un biseautage (8), situé côté frontal, dans la zone du diamètre intérieur du tube en matière synthétique (1), qui entoure une bague d'étanchéité (5) maintenue dans l'embout de raccordement (2) profilé, étant maintenue axialement rigidement entre l'embout de raccordement (2) et une douille de serrage (3), **caractérisé en ce que**, dans la position de raccordement du tube en matière synthétique (1), sur le côté, opposé à la face frontale (7) de l'extrémité de raccordement (4), de la bague d'étanchéité (5), l'embout de raccordement (2) présente une gorge de logement (9) pour un circlip (10) élastique, ouvert côté périphérie, circlip (10) soutenu de manière radialement élastique dans la gorge de logement (9) et dont le diamètre extérieur est plus grand que le diamètre intérieur du tube en matière synthétique (1), mais plus petit que le diamètre extérieur du biseautage (8) de l'extrémité de raccordement (4) du tube en matière synthétique (1).

2. Dispositif selon la revendication 1, **caractérisé en ce que** le circlip (10) est soutenu de manière radialement élastique dans la gorge de logement (9) à l'aide de languettes élastiques (11).
